# EUROPÄISCHE PATENTSCHRIFT

(11) **EP 1 647 177 B1**
(45) Veröffentlichungstag und Bekanntmachung des Hinweises auf die Patenterteilung: **23.01.2008**
(21) Anmeldenummer: 05021928.6
(22) Anmeldetag: 07.10.2005
(51) Int. Cl.: A01D 34/81

(54) **Verfahrbares Gerät zur Garten- und Landschaftspflege**
Mobile device for garden and landscape maintenance
Appareil mobile pour l'entretien du jardin et du paysage

(30) Priorität: 15.10.2004 DE 102004050210
(43) Veröffentlichungstag der Anmeldung: 19.04.2006
(73) Patentinhaber: Wolf-Garten AG, 4702 Oensingen (CH)
(72) Erfinder: Held, Peter, 57584 Scheuerfeld (DE)
(74) Vertreter: Koch, Günther

(56) Entgegenhaltungen:
- DE-U1- 8 809 901
- US-A- 5 205 113
- US-A1- 2003 010 008
- US-B1- 6 722 446

## Beschreibung

Die vorliegende Erfindung bezieht sich auf ein verfahrbares Gerät zur Garten- und Landschaftspflege und insbesondere auf Gartengeräte, z.B. Elektro-Rasenmäher. Bei derartigen zweiachsigen Gartengeräten bewirkt das nach hinten auskragende Griffgestänge eine Verlagerung des Gesamtschwerpunktes nach hinten. Diese Schwerpunktsverlagerung wird noch unterstützt durch den Grasfangkorb, der hinter der Hinterachse am Fahrzeugchassis eingehängt ist und dessen Gewicht durch das beim Mähen aufgefangene Gras beträchtlich erhöht wird. Bei netzbetriebenen Rasenmähem wird das Zuführungskabel häufig am Griffgestänge verankert, wodurch sich beim Mähen eine Zugbelastung auf das Griffgestänge nach unten ergibt. All diese Maßnahmen beeinträchtigen die Standsicherheit eines solchen Gerätes, welches die Neigung hat, um die Hinterachse schon bei der kleinsten zusätzlichen Belastung (z.B. Niederdrücken des Griffgestänges) zu kippen, wodurch die Vorderachse vom Boden abgehoben wird und die Messer das Gras nicht mehr in der gewünschten Höhe treffen.

Durch eine Verlängerung des Radstandes könnte die Standsicherheit erhöht werden, jedoch verbietet sich eine solche Bauweise aus logistischen Gründen, weil die Geräte zur Reduzierung des Verpackungsvolumens möglichst kompakt und insbesondere kurz gebaut werden müssen. Dabei kommen möglichst kleine, leichte, kostengünstige Antriebsmotoren zum Einsatz. Andererseits kann die Länge des Griffgestänges wegen ergonometrischer und sicherheitstechnischer Forderungen nicht gekürzt werden. Es ist zwar bekannt, zur Erhöhung der Standsicherheit Rasenmäher im Bereich der Vorderachse mit massiven Stahlteilen zu versehen, die ausschließlich die Aufgabe haben, den Schwerpunkt nach vom zu verschieben. Um eine wirksame Schwerpunktsverlagerung nach vom zu erreichen, müssen diese Zusatzgewichte jedoch derart bemessen werden, dass das Gerät ein Gesamtgewicht erhält, das sich für den Versand und Verkauf als nachteilig erweist.

Die US 6 722 446 B1 betrifft eine Maschine zum Ausrotten von Kakteen oder anderen saftreichen Pflanzen, bei der von einem Traktor mehrere Schneidwerkzeuge gezogen werden, die durch Ballast auf den Boden gedrückt werden. Ein Ausgleich einer unerwünschten Kippbewegung ist hier nicht vorgesehen.

Die US 2003/010008 A1 betrifft einen selbstfahrenden Aufsitzrasenmäher, bei dem Ballastgewichte vorgesehen sind, die auswechselbar über den Vorderrädem angeordnet werden können.

Die US-A 5 205 113 betrifft einen handgeführten Rasenmäher in verschiedenen Ausführungsbeispielen, wobei in Fig. 29 ein Rasenmäher dargestellt ist, der anstelle der Laufräder Laufwalzen aufweist, die aus Stabilitätsgründen mit einem flüssigen Ballastmaterial angefüllt sind.

Die deutsche Gebrauchsmusterschrift G 88 09 901 U1 bezieht sich auf einen Kabeldistanzhalter für Elektrorasenmäher, der eine flache Gleitschale aufweist, die auf der einen Seite einen Einsteckbügel zur Aufnahme eines Kabelträgers aufweist und auf der gegenüberliegenden Seite ein Gegengewicht besitzt, das ein Kippen der Gleitschale verhindern soll.

Der Erfindung liegt daher die Aufgabe zugrunde, ein kompakt ausgebildetes, gewichtsmäßig leichtes Gerät zu schaffen, das durch eine verbesserte Standsicherheit gekennzeichnet ist und dadurch eine sichere und komfortable Bedienung gewährleistet, ohne das Transportgewicht unnötig zu erhöhen.

Gelöst wird die gestellte Aufgabe durch die im Anspruch 1 angegebenen Merkmale.

Wie erwähnt, ist die Erfindung in erster Linie für Elektro-Rasenmäher bestimmt. Die Erfindung kann aber auch auf andere Geräte, auch auf einachsige Geräte, wie z.B. Vertikutiergeräte, angewandt werden, um einen Gewichtsausgleich zu schaffen und den Bedienungskomfort zu erhöhen.

Der Ballastbehälter kann fest in das Gerät eingebaut sein. Er kann aber auch als Formkörper einem Hohlraum des Gerätechassis entsprechend ausgebildet in diesen einsetzbar und verriegelbar sein.

Ferner kann der Ballastbehälter als Zusatzteil für Rasenmäher oder dergleichen derart ausgebildet werden, dass er am Chassis des betreffenden Gerätes nachträglich verankert werden kann. Zu diesem Zweck kann der Ballastbehälter mit Haltemitteln ausgerüstet sein, die fast alle handelsüblichen Rasenmäher oder andere Geräte aufweisen.

Vorzugsweise ist der Behälter derart ausgebildet, dass er mit Wasser oder Sand oder einem anderen fließfähigen Material über eine verschließbare Öffnung gefüllt oder entleert werden kann. Es ist jedoch auch denkbar, den Behälter offen zur Aufnahme von Steinen oder anderen schweren Füllstoffen auszubilden.

Weitere Ausgestaltungen der Erfindung ergeben sich aus den Unteransprüchen.

Nachstehend wird ein Ausführungsbeispiel der Erfindung in Form eines handgeführten Rasenmähers beschrieben. In der Zeichnung zeigen:

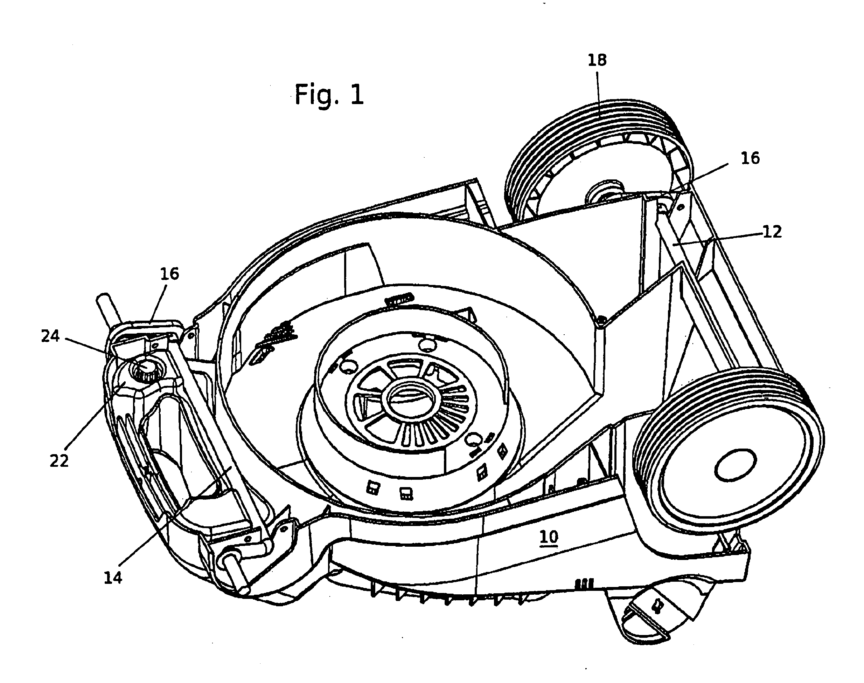

Fig. 1 ist eine perspektivische Teilansicht eines Rasenmähers mit eingesetztem Behälter von der Unterseite her betrachtet;

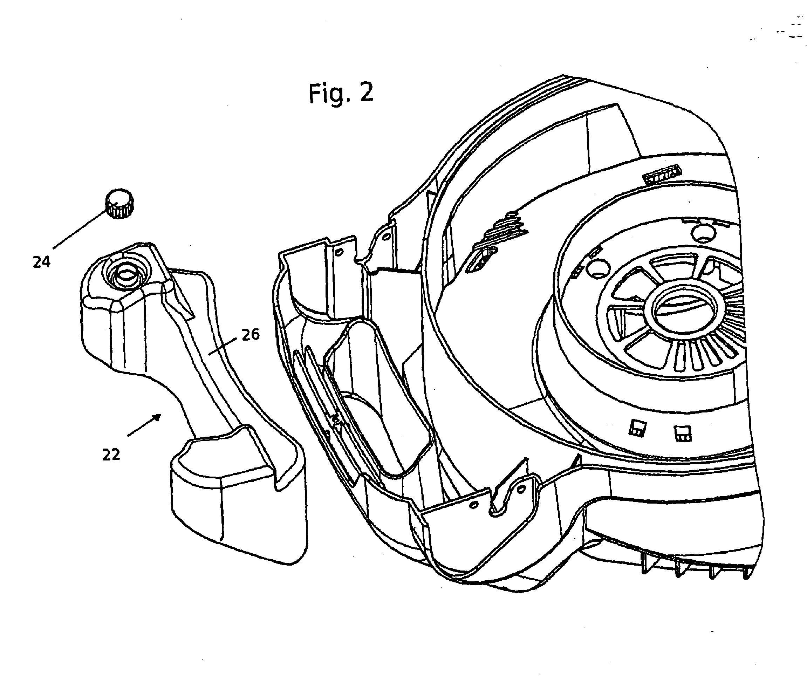

Fig. 2 ist eine perspektivische Darstellung des Rasenmähers gemäß Fig. 1 mit entnommenem Behälter;
Fig. 3 ist ein vertikaler Teilschnitt des in den Fig. 1 und 2 dargestellten Rasenmähers mit eingesetztem Behälter.

Der in der Zeichnung dargestellte Rasenmäher weist ein aus Blech oder insbesondere aus Kunststoff gefertigtes Chassis 10 auf, das die gekröpfte Hinterachse 12 und die ebenfalls gekröpfte Vorderachse 14 lagert. Über die Abkröpfungen 16 der Achsen 12 und 14, die der Schnitthöhenverstellung dienen, sind die Hinterräder 18 bzw. die Vorderräder 20 gelagert. Im Bereich der Hinterräder ist am Chassis ein in der Zeichnung nicht dargestelltes Griffgestänge angelenkt. Durch dieses Griffgestänge wird selbst dann, wenn dieses aus gewichtsmäßig relativ leichten Rohren besteht, der Massenmittelpunkt des Gesamtgerätes in die Nähe der Hinterachse verlegt, wodurch die Standsicherheit verringert wird und schon bei leichtem Niederdrücken des Griffgestänges die Gefahr eines Abhebens der Vorderachse besteht, was die Schnittleistung erheblich beeinträchtigt.

Bei derartigen Rasenmähern ist üblicherweise an den Grasauswurf an der Rückseite des Chassis 10 ein Grasfangkorb ansetzbar. Das Gewicht dieses Fangkorbes und insbesondere das sich in diesen während des Mähvorgangs ansammelnde Schnittgut belastet das Chassis weiter in einem hinter der Hinterachse 12 liegenden Bereich. Um hier einen Ausgleich zu schaffen und zum Zwecke der Standsicherheit den Gesamtschwerpunkt des Gerätes nach vom zu verlegen, ist gemäß der Erfindung ein Ballastbehälter 22 vorgesehen. Dieser Ballastbehälter ist im Bereich der Vorderachse 14 am Chassis festlegbar. Wie aus der Zeichnung ersichtlich, weist das Chassis 10 des Rasenmähers im Bereich der Vorderachse einen Hohlraum auf, und der Behälter 22 ist entsprechend diesem Hohlraum geformt. Der Behälter besteht beispielsweise aus Kunststoff und weist einen Einfüllstutzen 24 auf, nach dessen Öffnen der Behälter mit Wasser oder Sand oder einem anderen fließfähigen Ballastgut angefüllt werden kann.

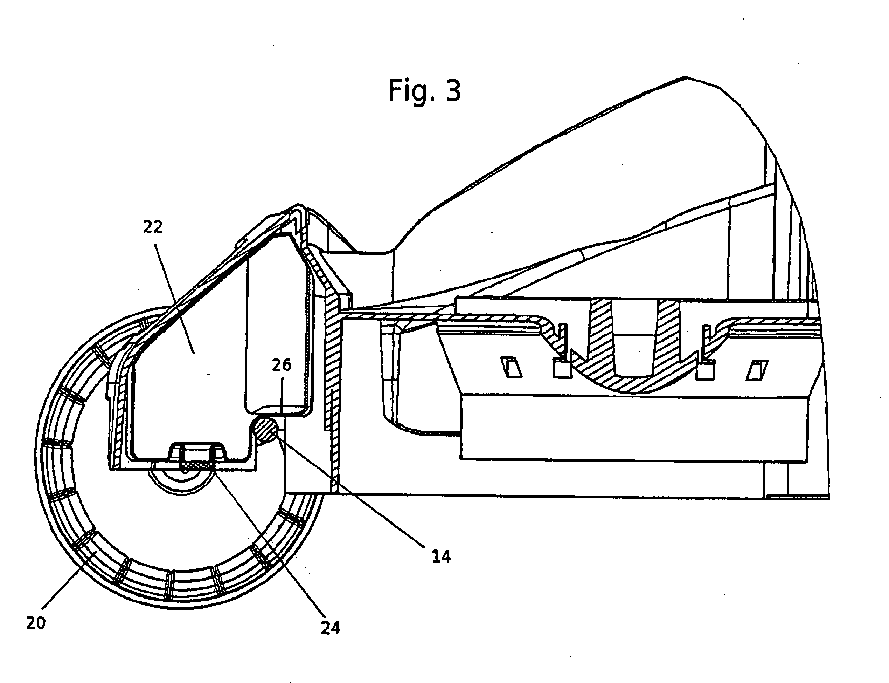

Gemäß dem dargestellten Ausführungsbeispiel ist der Behälter 22 von unten her in das Chassis einsetzbar und er wird durch die Vorderachse 14 am Chassis gehaltert. Im montierten Zustand ruht der Behälter 22 mit seinem zurückspringenden Abschnitt 26 auf dieser Vorderachse 14 (Fig. 3).

Durch das Gewicht des Ballastbehälters 22 wird der Gesamtschwerpunkt des Gerätes nach vom verlegt und dadurch die Standsicherheit vergrößert. Der Behälter 22 kann, wie im Ausführungsbeispiel dargestellt, getrennt vom Rasenmäher geliefert und am Verbrauchsort eingebaut werden. Es ist jedoch auch denkbar, den Behälter fest im Rasenmäherchassis anzubringen. Ferner ist es möglich, den Behälter als Zusatzteil derart zu fertigen, dass er auf alle gängigen Rasenmäher aufsetzbar ist und darauf verankert werden kann. Als Verankerungspunkte kommen dabei die freiliegenden Radachsenabschnitte sowie die den Bereich des umlaufenden Messers umgebende Schürze in Betracht.

Die Erfindung ist nicht auf zweiachsige Rasenmäher beschränkt, sondern kann vorteilhaft für alle verfahrbare Geräte zur Garten- und Landschaftspflege Anwendung finden, bei denen das Problem der Standsicherheit besteht. Darüberhinaus kann die Erfindung auch bei einachsigen Geräten angewandt werden, um einen Gewichtsausgleich zu erzielen und die Führung des Gerätes über das Griffgestänge zu erleichtern. Hierfür kommen beispielsweise einachsige Vertikutiergeräte in Betracht.

Wie aus der beiliegenden Zeichnung ersichtlich, ist der Ballastbehälter 22 im betriebsfertigen Zustand des Rasenmähers im Chassis derart eingebaut, dass der Einfüllstutzen 24 nach unten weist. Dadurch kann nach Lösen des Einfüllstutzens der Ballastbehälter auf einfache Weise entleert werden, um beispielsweise im Winter ein Einfrieren des Ballastwassers zu verhindern. Ein Auffüllen kann auf einfache Weise erfolgen, nachdem der Rasenmäher auf seine Rückseite umgelegt ist und/oder der Behälter 22 vom Chassis getrennt ist.

### Bezugszeichenliste

- 10: Chassis
- 12: Hinterachse
- 14: Vorderachse
- 16: Abkröpfungen
- 18: Hinterräder
- 20: Vorderräder
- 22: Ballastbehälter
- 24: Einfüllstutzen
- 26: zurückspringender Abschnitt

## Patentansprüche

1. Verfahrbares Gerät zur Garten- und Landschaftspflege, welches einen Behälter (22) aufweist, der zum Zwecke der Schwerpunktverlagerung mit einem Ballaststoff anfüllbar ist,
**dadurch gekennzeichnet, dass** der Behälter (22) der Form eines Chassishohlraumes angepasst und in diesem abgestützt ist.

2. Gerät nach Anspruch 1,
**dadurch gekennzeichnet, dass** es handgeführt ist und insbesondere als Rasenmäher ausgebildet ist und dass es ein zweiachsiges Chassis mit einem nach hinten geführten Griffgestänge aufweist und dass das Chassis (10) im Bereich der Vorderachse einen Hohlraum aufweist, dem der beispielsweise aus Kunststoff bestehende Behälter (22) in seiner Form angepasst, von unten her einsetzbar und durch Haltemittel abstützbar ist.

3. Gerät nach Anspruch 2,
**dadurch gekennzeichnet, dass** der Behälter (22) im montierten Zustand von der Vorderachse (14) des Chassis (10) abgestützt ist.

4. Gerät nach Anspruch 1,
**dadurch gekennzeichnet, dass** der Behälter (22) einen festen Bestandteil des Chassis (10) bildet.

5. Gerät nach Anspruch 1,
**dadurch gekennzeichnet, dass** der Behälter (22) lösbar mit dem Chassis (10) des Gerätes verbindbar ist.

6. Gerät nach einem der Ansprüche 1 bis 5,
**dadurch gekennzeichnet, dass** der Behälter (22) einen Einfüllstutzen (24) aufweist, über den der Behälter mit Wasser oder Sand oder einem anderen fließfähigen Ballaststoff anfüllbar ist.

7. Gerät nach Anspruch 6,
**dadurch gekennzeichnet, dass** der Einfüllstutzen (24) im betriebsfertigen Zustand des Gerätes nach unten weist.

## Claims

1. Steerable apparatus for garden and landscape cultivation, which has a container (22) which can be filled with a ballast material for the purpose of shifting the centre of gravity,
**characterized in that** the container (22) is matched to the shape of a chassis cavity and is supported in this.

2. Apparatus according to claim 1,
**characterized in that** it is hand-controlled and in particular formed as a lawnmower and that it has a biaxial chassis with a gripping rod guided towards the rear and in the area of the front axle the chassis (10) has a cavity which is matched in shape to the container (22) consisting for example of plastic, can be inserted from below and supported by holding means.

3. Apparatus according to claim 2,
**characterized in that** when assembled the container (22) is supported by the front axle (14) of the chassis (10).

4. Apparatus according to claim 1,
**characterized in that** the container (22) forms a solid part of the chassis (10).

5. Apparatus according to claim 1,
**characterized in that** the container (22) can be releasably connected to the chassis (10) of the apparatus.

6. Apparatus according to one of claims 1 to 5,
**characterized in that** the container (22) has a filler (24) via which the container can be filled with water or sand or another free-flowing ballast material.

7. Apparatus according to claim 6,
**characterized in that** the filler (24) points downwards when the apparatus is ready for use.

## Revendications

1. Engin mobile pour l'entretien des jardins et des aménagements paysagers, comprenant un réservoir (22) pouvant être rempli d'un matériau de lestage afin de déplacer le centre de gravité, **caractérisé en ce que** le réservoir (22) est adapté à la forme d'une cavité du châssis et y prend appui.

2. Engin selon la revendication 1, **caractérisé en ce qu'**il est guidé à la main et est notamment réalisé sous la forme d'une tondeuse à gazon, **en ce qu'**il présente un châssis à deux essieux et un guidon partant vers l'arrière, et **en ce que** le châssis (10) présente, dans la zone de l'essieu avant, une cavité dont la forme est adaptée au réservoir (22) en matière plastique par exemple, lequel réservoir peut être mis en place par le bas et maintenu par des moyens de fixation.

3. Engin selon la revendication 2, **caractérisé en ce que** le réservoir (22) à l'état monté est supporté par l'essieu avant (14) du châssis (10).

4. Engin selon la revendication 1, **caractérisé en ce que** le réservoir (22) constitue un élément faisant corps avec le châssis (10).

5. Engin selon la revendication 1, **caractérisé en ce que** le réservoir (22) peut être relié de façon amovible au châssis (10) de l'engin.

6. Engin selon l'une des revendications 1 à 5, **caractérisé en ce que** le réservoir (22) présente un embout de remplissage (24) par le biais duquel le réservoir peut être rempli d'eau ou de sable ou d'un autre matériau de lestage coulant.

7. Engin selon la revendication 6, **caractérisé en ce que** l'embout de remplissage (24) pointe vers le bas lorsque l'engin est prêt à fonctionner.
